# EUROPEAN PATENT SPECIFICATION

(11) **EP 3 397 535 B1**
(45) Date of publication and mention of the grant of the patent: **04.03.2020**
(21) Application number: 16834040.4
(22) Date of filing: 20.12.2016
(51) Int. Cl.: B60T 11/21

(54) **HYDRAULIC BRAKING SYSTEM WITH SAFETY FUNCTIONS AND ANCILLARY FUNCTIONS FOR FARM VEHICLES, AND METHOD FOR CONTROLLING THE SYSTEM**
HYDRAULISCHES BREMSSYSTEM MIT SICHERHEITS- UND HILFSFUNKTIONEN FÜR EIN LANDWIRTSCHAFTSFAHRZEUG UND DESSEN KONTROLLMETHODE
SYSTEME DE FREINAGE POUR VEHICULE AGRICOLE AVEC FONCTIONS DE SECURITE ET AUXILIAIRES, ET METHODE DE CONTROLE DU SYSTEME

(30) Priority: 29.12.2015 IT UB20159312; 28.12.2015 IT UB20159327
(43) Date of publication of application: 07.11.2018
(73) Proprietor: VHIT S.p.A., 26010 Offanengo (IT)
(72) Inventor: CADEDDU, Leonardo, 26010 Offanengo (cr) (IT)
(74) Representative: Bee, Joachim
(86) International application number: PCT/IB2016/057814
(87) International publication number: WO 2017/115216

(56) References cited:
- EP-A1- 2 216 219
- EP-A2- 1 223 093
- WO-A1-2014/091349
- DE-A1- 4 234 923
- DE-A1- 10 145 789

## Description

### Technical field

This invention generally relates to braking systems for operating machines such as farm vehicles and the like, and more particular it concerns a hydraulic braking system for one such vehicle, equipped with safety functions and ancillary functions based on interventions on the vehicle's braking members, as well as a method for controlling the system.

### Prior Art

In the last years, also farm vehicles and the like, especially those capable of attaining relatively high speeds, have started being equipped with safety functions based on interventions on the vehicle's braking members. Among those functions, the one most familiar also to laymen is the Anti-lock Braking System, commonly known with the acronym ABS. Other safety functions are the Acceleration Slip Regulation (ASR), the stability control or Electronic Stability Program (ESP), and so on. The units actuating such safety functions can be entrusted also with actuating ancillary functions also requiring interventions on the braking members, such as the Steer-by-Braking Function (SBF).

As known, in many farm vehicles or the like, the braking system makes use, generally for the sake of compatibility of the fluids, of mineral-based fluid, for instance of the LHM (Liquide Hydraulique Mineral) type in order to operate the braking members: actually, the brakes are located at the outlet from the differential gear, which just operates with mineral fluid. In these cases, conventional hydraulic ABS systems designed for operating with non-mineral brake liquid, of the DOT (U.S. Department Of Transport) 3, 4, 5 type or the like, cannot be used, since, as known to the skilled in the art, mineral oil would damage the hydraulic control unit of the hydraulic ABS that operates with non-mineral fluid.

Patent Application WO 2014/091349 in the name of the Applicant discloses a hydraulic braking system for farm vehicles or the like, equipped with safety functions (ABS, ESP..., hereinafter referred to in the whole as ABS) and ancillary functions (in particular, steer-by-braking) and arranged to operate with two incompatible fluids, a first fluid for actuating braking and the safety and ancillary functions, and a second fluid for acting on the brakes. Operation with two kinds of fluid is made possible by an interface device (bi-fluidic relay) interposed between the system parts operating with different fluids EP 2 216 219 A1 discloses another prior art braking system comprising two master cylinders.

The prior art braking system has a single master cylinder (with single or double circuit) associated with a brake booster driven by a control rod, and braking control is performed by means of a hydraulic control unit controlled by an electronic control unit. The safety and ancillary functions are entrusted to software installed in the electronic control unit.

Generally speaking, the Applicant has noticed that this system gives rise to some problems.

A first problem found is that the provision of a single pedal is not particularly appreciated by people using farm vehicles and, that is more, it demands a relatively complex control circuitry in order to determine whether a braking on all wheels or a steer-by-braking is being performed.

A second problem found is that the need for an intervention of the electronic control unit can become a limit in case of electrical blackout in the vehicle.

A further problem is that, in the prior art system, as usual in farm vehicles and the like equipped with the SBF function, the ABS is always turned off during steer-by-braking. Under such conditions, it may happen that the vehicle pulls up crops from ground.

### Description of the invention

It is an object of the present invention to provide a hydraulic braking system equipped with ABS, which solves the problems mentioned above.

According to the invention, this is achieved in that:
- the vehicle has a first and a second braking pedal connected to a first and a second master cylinder, respectively, each cylinder being configured for actuating braking by means of a front brake and/or a rear brake of the vehicle;
- the anti-lock braking device is configured for individually controlling and monitoring the front and rear brakes in order to perform said safety functions and ancillary functions;
- each master cylinder has a first brake actuation circuit connected with a section of the anti-lock braking device intended for controlling a respective rear brake, and a second brake actuation circuit connected with a respective inlet of a logic head with two inlets and one outlet, where the outlet is connected with a section of the anti-lock braking device intended for controlling the front brakes; and
- the anti-lock braking device is associated with a selector operable by a user of the vehicle for turning on or off the anti-lock braking device at least during steer-by-braking.

Preferably, the selector is a selector acting by means of electrical commands.

Preferably, the logic head is configured for operating so as to:
- intercept the flow of pressurised fluid between the master cylinder being actuated and the anti-lock braking device in the second brake actuation circuit if a single pedal, and hence a single master cylinder, is actuated in order to perform steer-by-braking; and
- letting the pressurised fluid flow from the master cylinders to the anti-lock braking device in the second brake actuation circuit if both pedals, and hence both master cylinders, are actuated.

The invention also concerns a method of controlling the hydraulic braking system.

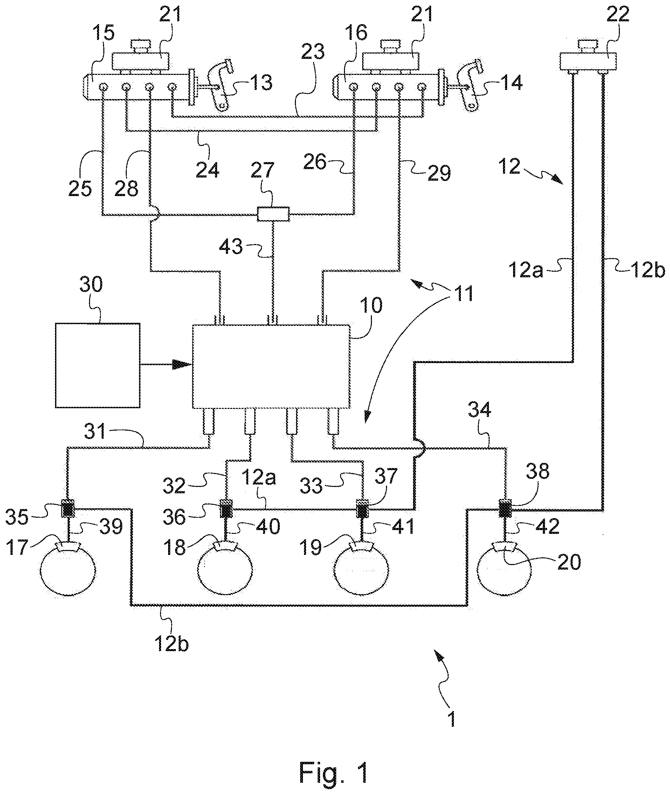

### Brief description of the figure

The above and other features and advantages of the present invention will become apparent from the following description of preferred embodiments made by way of non-limiting example with reference to the accompanying figure, which shows a schematic diagram of the hydraulic part of a braking system including the invention.

### Description of a preferred embodiment

Referring to the figure, there is shown a schematic diagram of the hydraulic part of a braking system 1 of a farm vehicle or the like (hereinafter referred to as "tractor"), equipped with ABS and possibly with other safety functions, which in general are all managed by unit 10 controlling the anti-lock braking system (hereinafter, simply referred to as ABS), as well as with ancillary functions, such as steer-by-braking, also managed by ABS 10.

Braking system 1 according to the invention uses two different and mutually incompatible fluids, in particular, non-mineral brake fluid of the DOT type, e.g. a glycol-based or silicone-based fluid. used in ABS 10 and in the brake control part, and mineral-based fluid (mineral fluid) used in the brakes. The two fluids are mutually incompatible in the sense that, should mineral fluid used in the brakes be used in the ABS that operates with non-mineral fluid, the ABS would be damaged. Such fluids flow in respective circuits 11, 12, shown in thin lines and thick lines, respectively, fed by reservoirs 21, 22, respectively.

Braking system 1 includes a pair of pedals 13 and 14 acting on respective master cylinders 15 and 16 for controlling the brakes on the left side (front brake 17 and rear brake 18) and the right side (front brake 19 and rear brake 20) of the vehicle.

In conventional manner, pedals 13 and 14 can be actuated either separately, in order to control braking on a single rear wheel (steer-by-braking), or jointly, in order to control braking of both rear wheels and both front wheels. In the latter case, the pedals are coupled through a lock, known per se, in order to prevent accidental steering, especially while travelling on a road.

Master cylinders 15 and 16 are advantageously double-circuit tandem cylinders of balanced type. They are fed with the brake fluid from reservoir 21, which is generally unique but is shown here by a separate unit for each cylinder for easiness and clarity of the drawing.

In the preferred embodiment, master cylinders 15 and 16 are connected together, in known manner, through balancing valves (not shown), and balancing ducts 23 and 24 for balancing the circuit on the control side of the cylinders and the circuit on the side opposite to the control side, respectively.

An exemplary embodiment of master cylinders 15 and 16 is disclosed in patent application WO 2006/103049 in the name of the Applicant.

In the example shown in the figure, each master cylinder 15 and 16 has a first brake actuation outlet 25 and 26, respectively, connected with a logic head 27, of known type, and a second brake actuation outlet 28 and 29, respectively, connected with ABS 10: the latter, in this example, is of a kind with three channels and four sensors, in order to individually monitor and control the rear and front wheels of the tractor.

ABS 10 is further associated with a selector 30, e.g. an electrical switch connected to the electrical part of the ABS (included for the sake of simplicity of the drawing in block 10), which can be manually actuated by the user in order to selectively turn on and off the ABS in determined working conditions of the tractor. More particularly, during steer-by-braking, selector 30 is to turn on the ABS when the risk of pulling up crops from ground exists, whereas it turns off the ABS when a reduction of the steering radius is required.

The electrical connection between selector 30 and ABS 10 is shown by a double-line arrow.

Logic head 27 is a valve acting as an AND gate with two inlets and one outlet. The inlets are connected with master cylinder outlets 25 and 26, and outlet 43 is connected to ABS 10, and specifically to the inlet channel intended for the joint control of the front wheels. The channels that, in ABS 10, are intended for the individual control of the rear wheels are in turn connected to the second outlets 28 and 29 of master cylinders 15, 16.

With the configuration assumed, ABS 10 has four outlets 31, 32, 33, 34 associated with brakes 17, 18, 19, 20, respectively. In order to enable use of two mutually incompatible fluids, in the sense explained above, outlets 31, 32, 33, 34 of ABS 10 are connected to a first input of respective interface devices (bi-fluidic relays) 35, 36, 37, 38, interposed between circuits 11 and 12 in order to separate the control part of the braking system (master cylinders 15, 16, logic head 27 and ABS 10) from brakes 17 to 20. Each relay has a second inlet connected to mineral fluid reservoir 22 through a duct 12a (for feeding the front brakes) or 12b (for feeding the rear brakes), respectively, whereas outlets 39, 40, 41 and 42 are connected to brakes 17, 18, 18, 20, respectively. Also reservoir 22, like reservoir 21 for DOT-type brake fluid, comprises two separate chambers feeding ducts 12a, 12b, respectively, with mineral-based fluid.

An exemplary embodiment of a bi-fluidic relay is disclosed in patent application WO 2014/091349, already mentioned.

It is to be appreciated that, even if four separate bi-fluidic relays are shown for the sake of clarity of the drawing, the relays will actually be sections of a single interface device, as shown in WO 2014/091349.

The operation of the described device is as follows.

When the vehicle is travelling on a road, hence with the pedals coupled, the operation is substantially conventional. Upon braking, pressurised fluid passes from master cylinders 15, 16 to ducts 25, 26 and 28, 29. Due to the simultaneous presence of pressurised fluid in ducts 25, 26, logic head 27 is open and lets fluid pass to the hydraulic control unit of ABS 10 through duct 43. Pressurised fluid in ABS outlet ducts 32, 33 in turn acts upon bi-fluidic relays 36, 37 which forward the fluid arriving through duct 12a to front brakes 18, 19. Similarly, fluid in ducts 28 and 29, through the hydraulic control unit of ABS 10 and outlets 31, 24 thereof, acts upon relays 35 and 38 which forward the fluid arriving through duct 12b to rear brakes 17, 20. If, during braking, one or more wheels reach the slip limit, the sensors (not shown) will inform the control unit of ABS 10, which will modulate the pressure thereby preventing locking of the concerned wheels. As known to the skilled in the art, modulation is made possible by cutting off the ABS inlets from the outlets.

Of course, in case of joint actuation of both pedals, also the balancing circuits of master cylinders 15, 16 (ducts 23, 24) are operating.

In a wholly similar manner, through the separate control of the pressures on the brakes of the individual wheels, it is possible to optionally achieve other safety functions demanding interventions on braking members, like the functions mentioned above, which are already provided for in road vehicles, as it is well known.

If on the contrary the pedals are not coupled, as it is usually the case during work in the fields, when steer-by-braking can be required, actuation of a single pedal (e.g. pedal 13) generates a pressure in the control-side circuit of concerned cylinder 15, and such pressure is transmitted, as before, to brake 17 of the corresponding rear wheel through duct 28, ABS 10, duct 31, relay 35 and duct 39. Clearly, operation of cylinder 15 generates a pressure also in duct 25: yet, such a pressure is not transmitted to the brakes since valve 27 remains closed, being inlet 26 inactive. Also the balancing circuits, whose pressure is intercepted by cylinder 16, remain inactive.

Under such conditions, ABS 10 can be turned off or on through selector 30.

If the selector is in a position turning off the ABS, the braked wheel is locked and becomes the centre of rotation of the steering, and the braking system thus operates in conventional manner, the ABS acting as a mere hydraulic connection.

If on the contrary selector 30 is in such a position as to keep on ABS 10, the braked wheel is not locked and this clearly prevents crops from being pulled up from ground, by increasing the steering radius.

The invention actually solves the problems mentioned above.

It preserves the classical two-pedal arrangement, more appreciated by the users and simpler to be managed.

Moreover, the non-automatic safety and ancillary functions are hydraulically controlled instead of being controlled by an electronic control unit, so that the problems deriving from a possible electrical blackout do not arise.

Further, the possibility of keeping on the ABS also during steer-by-braking increases the tractor versatility and, as said, reduces the possibility of damages to the crops during work in the fields.

It is clear that the above description has been given only by way of non-limiting example and that changes and modifications are possible without departing from the scope of the invention.

Thus, for instance, the invention can be applied also to an ABS with a different configuration, for instance an ABS including for instance supplementary control means configured for controlling and monitoring braking of the brakes of a trailer, in order the trailer adapts itself to decelerations imposed by the tractor, without affecting the dynamic configuration during braking of the tractor itself.

Moreover, balancing between master cylinders 15 and 16 could take place on a single side, in particular the side opposite to the control side, in which case the control-side circuits will become balanced due to the compensation on the opposite side. Yet, as it is clear for the skilled in the art, a breakage in one of the control-side circuits would reduce the braking effect, since ABS 10 would remove pressure also from the other circuit, and hence the solution shown, with balancing on both sides, is preferable.

## Claims

1. A hydraulic braking system (1) for farm vehicles or the like, including:
- an anti-lock braking device (10), which is fed by a first fluidic circuit (11) containing a first fluid and is arranged to manage safety functions and ancillary functions based on interventions on braking members of the vehicle, the ancillary functions including at least a steer-by-braking function;
- rear brakes (17, 20) and front brakes (18, 19) fed by a second fluidic circuit (12) containing a second fluid incompatible with said first fluid;
- bi-fluidic relays (35, 36, 37, 38) connected between the anti-lock braking device (10) and the brakes (17, 18, 19, 20) and configured for hydraulically separating said first fluidic circuit (11) from said second fluidic circuit (12);
the system being **characterised in that**:
- the vehicle has a first and a second braking pedal (13, 14) connected to a first and a second master cylinder (15, 16), respectively, each cylinder being configured for actuating braking by means of a front brake (18, 19) and/or a rear brake (17, 20) of the vehicle;
- the anti-lock braking device (10) is configured for individually controlling and monitoring the vehicle brakes (17, 18, 19, 20) in order to perform said safety functions and ancillary functions;
- each one of said master cylinders (15, 16) has a first brake actuation circuit (28, 29) connected with a section of the anti-lock braking device (10) intended for controlling a respective rear brake (17, 20), and a second brake actuation circuit (25, 26) connected with a respective inlet of a logic head (27) with two inlets and one outlet (43), where the outlet (43) is connected with a section of the anti-lock braking device (10) intended for controlling the front brakes (18, 19); and
- the anti-lock braking device (10) is associated with a selector (30) operable by a user of the vehicle for turning on or off the anti-lock braking device (10) at least during steer-by-braking.

2. The hydraulic braking system as claimed in claim 1, wherein said first fluid is a non-mineral fluid and said second fluid is a mineral fluid.

3. The hydraulic braking system as claimed in claim 1 or 2, wherein said selector (30) is a selector acting by means of electrical commands.

4. The hydraulic braking system as claimed in any of claims 1 to 3, wherein said logic head (27) is configured for:
- intercepting the flow of pressurised fluid between the master cylinder (15, 16) being actuated and the anti-lock braking device (10) in said second brake actuation circuit (25, 26) if a single pedal (13, 14), and hence a single master cylinder (15, 16), is actuated in order to perform steer-by-braking; and
- letting the pressurised fluid flow from the master cylinders (15, 16) to the anti-lock braking device (10) in said second circuit (25, 26) if both pedals (13, 14), and hence both master cylinders (15, 16), are actuated.

5. The system as claimed in any of claims 1 to 4, wherein said anti-lock braking device (10) further comprises supplementary control means configured for controlling and monitoring braking of brakes of a trailer.

6. A method of controlling a hydraulic braking system (1) of a farm vehicle or the like equipped with an anti-lock braking device (10) arranged to manage safety functions and ancillary functions based on interventions on brakes (17, 18, 19, 20) of the vehicle, the ancillary functions including at least a steer-by-braking function, the method including the steps of:
- feeding the anti-lock braking device (10) with a first fluid through a first fluidic circuit (11), and feeding the brakes (17, 18, 19, 20) with a second fluid through a second fluidic circuit (12), said second fluid being incompatible with said first fluid;
- hydraulically separating the first and second fluidic circuits (11, 12) in order to prevent fluid from flowing between members fed by either of said fluidic circuits;
and being **characterised in that** it further includes the steps of:
- actuating the brakes (17, 18, 19, 20) through a first and a second braking pedal (13, 14), which pedals are operable either independently, in order to perform steer-by-braking, or jointly to perform braking on all wheels, said pedals acting on a first and a second master cylinder (15, 16), respectively, connected to the anti-lock braking device (10), each cylinder being configured for actuating braking by means of a front brake and/or a rear brake of the vehicle;
- individually controlling and monitoring front and rear brakes (17, 18, 19, 20) of the vehicle by means of said anti-lock braking device (10) in order to perform said safety functions and said ancillary functions;
- connecting, between said master cylinders (15, 16) and the anti-lock braking device (10), a logic head (27) arranged to perform control of the front brakes (18, 19);
- selecting in said anti-lock braking device (10), at least during steer-by-braking, either a first operating manner in which the anti-lock braking device (10) is turned on, or a second operating manner in which the anti-lock braking device (10) is turned off.

7. The method as claimed in claim 6, wherein said step of feeding the anti-lock braking device (10) with a first fluid through a first fluidic circuit (11), and feeding the brakes (17, 18, 19, 20) with a second fluid through a second fluidic circuit (12) is performed by using a non-mineral fluid as the said first fluid and a mineral fluid as the said second fluid.

8. The method as claimed in claim 6 or 7, wherein said selecting step is electrically controlled.

9. The method as claimed in in any of claims 6 to 8, further including the step of configuring the logic head (27) so as to:
- intercept the flow of pressurised fluid between the master cylinder (15, 16) being actuated and the anti-lock braking device (10) if a single pedal (13, 14), and hence a single master cylinder (15, 16), is actuated in order to perform steer by-braking; and
- let the pressurised fluid flow from the master cylinders (15, 16) to the anti-lock braking device (10) if both pedals (13, 14), and hence both master cylinders (15, 16), are actuated.

10. The method as claimed in any of claims 6 to 9, further including, upon braking, the further steps of:
- directly transferring pressurised fluid from the master cylinders (15, 16) to the anti-lock braking device (10) for controlling braking by means of the rear brakes;
- transferring pressurised fluid from the master cylinders (15, 16) to the anti-lock braking device (10) through the logic head (27) for controlling braking by means of the front brakes.

11. The method as claimed in any of claims 6 to 10, further including the step of controlling and monitoring brakes of a trailer by means of said anti-lock braking device.

## Patentansprüche

1. Hydraulisches Bremssystem (1) für Landwirtschaftsfahrzeuge oder dergleichen, umfassend:
- eine Antiblockier-Bremsvorrichtung (10), die durch einen ersten Flüssigkeitskreislauf (11) gespeist wird, der eine erste Flüssigkeit enthält und dazu eingerichtet ist, Sicherheitsfunktionen und Hilfsfunktionen basierend auf Eingriffen an Bremselementen des Fahrzeugs bereitzustellen, wobei die Hilfsfunktionen mindestens eine Lenkbremsfunktion umfassen;
- Hintere Bremsen (17, 20) und vordere Bremsen (18, 19), die durch einen zweiten Flüssigkeitskreislauf (12) gespeist werden, der eine zweite, mit der ersten Flüssigkeit unverträgliche Flüssigkeit enthält;
- bifluidische Relais (35, 36, 37, 38), die zwischen die Antiblockier-Bremsvorrichtung (10) und die Bremsen (17, 18, 19, 20) geschaltet und zum hydraulischen Trennen des ersten Flüssigkeitskreislaufs (11) vom zweiten Flüssigkeitskreislauf (12) eingerichtet sind;
wobei das System **dadurch gekennzeichnet ist, dass**:
- das Fahrzeug ein erstes und ein zweites Bremspedal (13, 14) aufweist, die mit einem ersten und einem zweiten Hauptzylinder (15, 16) verbunden sind, wobei jeder Zylinder zum Betätigen der Bremsung mittels einer vorderen Bremse (18, 19) und/oder einer hinteren Bremse (17, 20) des Fahrzeugs eingerichtet ist;
- die Antiblockier-Bremsvorrichtung (10) dazu eingerichtet ist, die Fahrzeugbremsen (17, 18, 19, 20) einzeln zu steuern und zu überwachen, um die Sicherheitsfunktionen und Hilfsfunktionen auszuführen;
- jeder der Hauptzylinder (15, 16) einen ersten Bremsbetätigungskreislauf (28, 29), der mit einem Abschnitt der Antiblockier-Bremsvorrichtung (10) verbunden ist, der zum Steuern einer jeweiligen hinteren Bremse (17, 20) vorgesehen ist, und einen zweiten Bremsbetätigungskreis (25, 26) aufweist, der mit einem jeweiligen Eingang eines Logikkopfes (27) mit zwei Einlässen und einem Auslass (43) verbunden ist, wobei der Ausgang (43) mit einem Abschnitt der Antiblockier-Bremsvorrichtung (10) verbunden ist, der zum Steuern der vorderen Bremsen (18, 19) vorgesehen ist; und
- der Antiblockier-Bremsvorrichtung (10) ein Wählschalter (30) zugeordnet ist, der durch einen Benutzer des Fahrzeugs betätigt werden kann, um die Antiblockier-Bremsvorrichtung (10) mindestens während der Lenkbremsung ein- oder auszuschalten.

2. Hydraulisches Bremssystem nach Anspruch 1, wobei die erste Flüssigkeit eine nichtmineralische Flüssigkeit ist und die zweite Flüssigkeit eine mineralische Flüssigkeit ist.

3. Hydraulisches Bremssystem nach Anspruch 1 oder 2, wobei der Wählschalter (30) ein Wählschalter ist, der mittels elektrischer Befehle wirkt.

4. Hydraulisches Bremssystem nach einem der Ansprüche 1 bis 3, wobei der Logikkopf (27) dazu eingerichtet ist:
- den Fluss der Druckflüssigkeit zwischen dem zu betätigenden Hauptzylinder (15, 16) und der Antiblockier-Bremsvorrichtung (10) im zweiten Bremsbetätigungskreislauf (25, 26) zu unterbrechen, wenn ein einzelnes Pedal (13, 14) und damit ein einzelner Hauptzylinder (15, 16) betätigt wird, um eine Lenkbremsung durchzuführen; und
- die Druckflüssigkeit aus den Hauptzylindern (15, 16) zur Antiblockier-Bremsvorrichtung (10) im zweiten Kreislauf (25, 26) fließen zu lassen, wenn beide Pedale (13, 14) und damit beide Hauptzylinder (15, 16) betätigt werden.

5. System nach einem der Ansprüche 1 bis 4, wobei die Antiblockier-Bremsvorrichtung (10) ferner zusätzliche Steuermittel umfasst, die zum Steuern und Überwachen des Bremsens der Bremsen eines Anhängers eingerichtet sind.

6. Verfahren zum Steuern eines hydraulischen Bremssystems (1) eines Landwirtschaftsfahrzeugs oder dergleichen, das mit einer Antiblockier-Bremsvorrichtung (10) ausgestattet ist, die dazu eingerichtet ist, Sicherheitsfunktionen und Hilfsfunktionen basierend auf Eingriffen an den Bremsen (17, 18, 19, 20) des Fahrzeugs bereitzustellen, wobei die Hilfsfunktionen mindestens eine Lenkbremsfunktion umfassen, wobei das Verfahren die folgenden Schritte umfasst:
- Versorgen der Antiblockier-Bremsvorrichtung (10) mit einer ersten Flüssigkeit über einen ersten Flüssigkeitskreislauf (11) und Versorgen der Bremsen (17, 18, 19, 20) mit einer zweiten Flüssigkeit über einen zweiten Flüssigkeitskreislauf (12), wobei die zweite Flüssigkeit mit der ersten Flüssigkeit unverträglich ist;
- hydraulische Trennung des ersten und des zweiten Flüssigkeitskreislaufs (11, 12), um zu verhindern, dass Flüssigkeiten zwischen den durch einen der Flüssigkeitskreisläufe gespeisten Teilen fließen;
und **dadurch gekennzeichnet, dass** sie ferner die folgenden Schritte umfasst:
- Betätigen der Bremsen (17, 18, 19, 20) über ein erstes und ein zweites Bremspedal (13, 14), wobei die Pedale entweder unabhängig voneinander, um eine Lenkbremsung durchzuführen, oder zusammen betätigbar sind, um eine Bremsung an allen Rädern durchzuführen, wobei die Pedale auf einen ersten und einen zweiten Hauptzylinder (15, 16) wirken, die jeweils mit der Antiblockier-Bremsvorrichtung (10) verbunden sind, wobei jeder Zylinder dazu eingerichtet ist, die Bremsung mittels einer vorderen Bremse und/oder einer hinteren Bremse des Fahrzeugs zu betätigen;
- vordere und hintere Bremsen (17, 18, 19, 20) des Fahrzeugs mittels der Antiblockier-Bremsvorrichtung (10) einzeln zu steuern und zu überwachen, um die Sicherheitsfunktionen und die Hilfsfunktionen auszuführen;
- Verbinden eines Logikkopfes (27) zwischen den Hauptzylindern (15, 16) und der Antiblockier-Bremsvorrichtung (10), der dazu eingerichtet ist, die Steuerung der vorderen Bremsen (18, 19) durchzuführen;
- in der Antiblockier-Bremsvorrichtung (10) mindestens während einer Lenkbremsung entweder eine erste Betriebsart, bei der die Antiblockier-Bremsvorrichtung (10) eingeschaltet ist, oder eine zweite Betriebsart, bei der die Antiblockier-Bremsvorrichtung (10) ausgeschaltet ist, auszuwählen.

7. Verfahren nach Anspruch 6, wobei der Schritt des Versorgens der Antiblockier-Bremsvorrichtung (10) mit einer ersten Flüssigkeit über einen ersten Flüssigkeitskreislauf (11) und des Versorgens der Bremsen (17, 18, 19, 20) mit einer zweiten Flüssigkeit über einen zweiten Flüssigkeitskreislauf (12) unter Verwendung einer nichtmineralischen Flüssigkeit als erster Flüssigkeit und einer mineralischen Flüssigkeit als zweiter Flüssigkeit durchgeführt wird.

8. Verfahren nach Anspruch 6 oder 7, wobei der Auswahlschritt elektrisch gesteuert wird.

9. Verfahren nach einem der Ansprüche 6 bis 8, ferner umfassend den Schritt des Einrichtens des Logikkopfes (27), um:
- den Fluss der Druckflüssigkeit zwischen dem zu betätigenden Hauptzylinder (15, 16) und der Antiblockier-Bremsvorrichtung (10) zu unterbrechen, wenn ein einzelnes Pedal (13, 14) und damit ein einzelner Hauptzylinder (15, 16) betätigt wird, um eine Lenkbremsung durchzuführen; und
- die Druckflüssigkeit aus den Hauptzylindern (15, 16) zur Antiblockier-Bremsvorrichtung (10) fließen zu lassen, wenn beide Pedale (13, 14) und damit beide Hauptzylinder (15, 16) betätigt werden.

10. Verfahren nach einem der Ansprüche 6 bis 9, ferner umfassend die folgenden weiteren Schritte beim Bremsen:
- direktes Leiten von Druckflüssigkeit aus den Hauptzylindern (15, 16) an die Antiblockier-Bremsvorrichtung (10) zum Steuern der Bremsung mittels der hinteren Bremsen;
- Leiten von Druckflüssigkeit aus den Hauptzylindern (15, 16) zur Antiblockier-Bremsvorrichtung (10) über den Logikkopf (27) zum Steuern des Bremsens mittels der vorderen Bremsen.

11. Verfahren nach einem der Ansprüche 6 bis 10, ferner umfassend den Schritt des Steuerns und Überwachens der Bremsen eines Anhängers mittels der Antiblockier-Bremsvorrichtung.

## Revendications

1. Système de freinage hydraulique (1) pour véhicules agricoles ou similaires, comprenant :
un dispositif de freinage anti-blocage (10), qui est alimenté par un premier circuit fluidique (11) contenant un premier fluide et qui est conçu pour gérer des fonctions de sécurité et des fonctions auxiliaires sur la base d'interventions sur des éléments de freinage du véhicule, les fonctions auxiliaires comprenant au moins une fonction de direction par freinage ;
des freins arrière (17, 20) et des freins avant (18, 19) alimentés par un second circuit fluidique (12) contenant un second fluide incompatible avec ledit premier fluide ;
des relais bi-fluidiques (35, 36, 37, 38) connectés entre le dispositif de freinage anti-blocage (10) et les freins (17, 18, 19, 20) et conçus pour séparer hydrauliquement ledit premier circuit fluidique (11) dudit second circuit fluidique (12) ;
le système étant **caractérisé en ce que** :
le véhicule a une première et une seconde pédale de frein (13, 14) reliées à un premier et un second maître-cylindre (15, 16), respectivement, chaque cylindre étant conçu pour actionner le freinage au moyen d'un frein avant (18, 19) et/ou d'un frein arrière (17, 20) du véhicule ;
le dispositif de freinage anti-blocage (10) est conçu pour commander et surveiller individuellement les freins de véhicule (17, 18, 19, 20) afin d'exécuter lesdites fonctions de sécurité et fonctions auxiliaires ;
chacun desdits maîtres-cylindres (15, 16) a un premier circuit d'actionnement de frein (28, 29) relié à une section du dispositif de freinage anti-blocage (10) destinée à commander un frein arrière (17, 20) respectif, et un second circuit d'actionnement de frein (25, 26) relié à une entrée respective d'une tête logique (27) avec deux entrées et une sortie (43), la sortie (43) étant reliée à une section du dispositif de freinage anti-blocage (10) destinée à commander les freins avant (18, 19) ; et
le dispositif de freinage anti-blocage (10) est associé à un sélecteur (30) pouvant être actionné par un utilisateur du véhicule pour activer ou désactiver le dispositif de freinage anti-blocage (10) au moins pendant la direction par freinage.

2. Système de freinage hydraulique selon la revendication 1, ledit premier fluide étant un fluide non minéral et ledit second fluide étant un fluide minéral.

3. Système de freinage hydraulique selon la revendication 1 ou 2, ledit sélecteur (30) étant un sélecteur agissant au moyen de commandes électriques.

4. Système de freinage hydraulique selon l'une quelconque des revendications 1 à 3, ladite tête logique (27) étant conçue pour :
intercepter l'écoulement de fluide sous pression entre le maitre-cylindre (15, 16) qui est actionné et le dispositif de freinage anti-blocage (10) dans ledit second circuit d'actionnement de frein (25, 26) si une seule pédale (13, 14), et donc un seul maitre-cylindre (15, 16), est actionnée afin d'effectuer la direction par freinage ; et
laisser le fluide sous pression s'écouler des maîtres-cylindres (15, 16) vers le dispositif de freinage anti-blocage (10) dans ledit second circuit (25, 26) si les deux pédales (13, 14), et donc les deux maîtres-cylindres (15, 16), sont actionnées.

5. Système selon l'une quelconque des revendications 1 à 4, ledit dispositif de freinage anti-blocage (10) comprenant en outre un moyen de commande supplémentaire conçu pour commander et surveiller le freinage des freins d'une remorque.

6. Procédé de commande d'un système de freinage hydraulique (1) d'un véhicule agricole ou similaire équipé d'un dispositif de freinage anti-blocage (10) conçu pour gérer des fonctions de sécurité et des fonctions auxiliaires sur la base d'interventions sur les freins (17, 18, 19, 20) du véhicule, les fonctions auxiliaires comprenant au moins une fonction de direction par freinage, le procédé comprenant les étapes consistant à :
alimenter le dispositif de freinage anti-blocage (10) avec un premier fluide à travers un premier circuit fluidique (11), et alimenter les freins (17, 18, 19, 20) avec un second fluide à travers un second circuit fluidique (12), ledit second fluide étant incompatible avec ledit premier fluide ;
séparer hydrauliquement les premier et second circuits fluidiques (11, 12) afin d'empêcher le fluide de circuler entre des éléments alimentés par l'un ou l'autre desdits circuits fluidiques ;
et étant **caractérisé en ce qu'**il comprend en outre les étapes consistant à :
actionner les freins (17, 18, 19, 20) par l'intermédiaire d'une première et d'une seconde pédale de freinage (13, 14), lesquelles pédales peuvent être actionnées soit indépendamment, pour effectuer la direction par freinage, soit conjointement pour effectuer un freinage sur toutes les roues, lesdites pédales agissant sur un premier et un second maître-cylindre (15, 16), respectivement, reliés au dispositif de freinage anti-blocage (10), chaque cylindre étant conçu pour actionner le freinage au moyen d'un frein avant et/ou d'un frein arrière du véhicule ;
commander et surveiller individuellement les freins avant et arrière (17, 18, 19, 20) du véhicule au moyen dudit dispositif de freinage anti-blocage (10) afin de réaliser lesdites fonctions de sécurité et lesdites fonctions auxiliaires ;
connecter, entre lesdits maîtres-cylindres (15, 16) et le dispositif de freinage anti-blocage (10), une tête logique (27) conçue pour effectuer la commande des freins avant (18, 19) ;
sélectionner dans ledit dispositif anti-blocage (10), au moins pendant la direction par freinage, soit une première manière de fonctionnement dans laquelle le dispositif anti-blocage (10) est activé, soit une seconde manière de fonctionnement dans laquelle le dispositif anti-blocage (10) est désactivé.

7. Procédé selon la revendication 6, ladite étape d'alimentation du dispositif de freinage anti-blocage (10) avec un premier fluide à travers un premier circuit fluidique (11), et d'alimentation des freins (17, 18, 19, 20) avec un second fluide à travers un second circuit fluidique (12) étant réalisée à l'aide d'un fluide non minéral en tant que ledit premier fluide et un fluide minéral en tant que ledit second fluide.

8. Procédé selon la revendication 6 ou 7, ladite étape étant commandée électriquement.

9. Procédé selon l'une quelconque des revendications 6 à 8, comprenant en outre l'étape consistant à concevoir la tête logique (27) de sorte à :
intercepter l'écoulement de fluide sous pression entre le maître-cylindre (15, 16) actionné et le dispositif de freinage anti-blocage (10) si une seule pédale (13, 14), et donc un seul maître-cylindre (15, 16), est actionnée afin d'effectuer la direction par freinage ; et
laisser s'écouler le fluide sous pression des maîtres-cylindres (15, 16) vers le dispositif de freinage anti-blocage (10) si les deux pédales (13, 14), et donc les deux maîtres-cylindres (15, 16), sont actionnées.

10. Procédé selon l'une quelconque des revendications 6 à 9, comprenant en outre, lors du freinage, les autres étapes consistant à :
transférer directement du fluide sous pression des maîtres-cylindres (15, 16) au dispositif de freinage anti-blocage (10) pour commander le freinage au moyen des freins arrière ;
transférer du fluide sous pression des maîtres-cylindres (15, 16) au dispositif de freinage anti-blocage (10) par l'intermédiaire de la tête logique (27) pour commander le freinage au moyen des freins avant.

11. Procédé selon l'une quelconque des revendications 6 à 10, comprenant en outre l'étape consistant à commander et à surveiller les freins d'une remorque au moyen dudit dispositif de freinage anti-blocage.
